# EUROPEAN PATENT APPLICATION

(11) **EP 2 418 255 A1**
(43) Date of publication of application: **15.02.2012**
(21) Application number: 11177127.5
(22) Date of filing: 10.08.2011
(51) Int. Cl.: C08L 81/02, H01B 3/30

(54) **Polymer compositions and their use as cable coverings**

(30) Priority: 10.08.2010 US 854032
(71) Applicant: General Cable Technologies Corporation, Highland Heights KY 41076 (US)
(72) Inventor: Mhetar, Vijay, Westfield, IN Indiana 46074 (US)
(74) Representative: Lord, Michael

(57) **Abstract**

The present invention relates to a crosslinked polymer containing polyphenylene sulfide (PSS) and an impact modifier, and its use as cable coverings, such as jacket or insulation. The compostion contains a crosslinked polymer containing of polyphenylene sulfide (PPS) and an impact modifier. Preferably, the impact modifier is present at about 20-50 percent (by weight of the total composition), preferably about 20-30 percent; and PPS is present at about 50-80 percent (by weight of the total composition), preferably about 70-80 percent. It is preferred that the polymer is crosslinked using irradiation.

## Description

### FIELD OF THE INVENTION

The present invention relates to crosslinked polymer compositions containing polyphenylene sulfide (PSS) and an impact modifier, and their use as cable coverings, such as jacket or insulation.

### BACKGROUND OF THE INVENTION

Polyphenylene sulfide (PPS) is a high temperature, semicrystalline, engineering thermoplastic with excellent chemical resistance, high heat deflection temperature, good electrical insulation properties, and inherent flame resistance without halogen. Consequently, it is useful in electronic applications such as in the formation of circuit boards, connectors and the like since polyphenylene sulfide can withstand the temperatures of vapor phase soldering without adversely affecting the properties of the molded resin such as blistering or dimensional distortion. Unfortunately, although polyphenylene sulfide has the necessary thermal stability for electronic applications, the material is relatively brittle and stiff, thus, has low impact strength. Moveover, when PPS is crystallized such as by a thermal curing treatment, the elongation thereof is sharply reduced and, thus, the PPS lacks the ability to stretch and is not very tear resistant. Accordingly, PPS is unsuitable for the heat-resistant coating of electric wires to which high elongation is required; and its use has been limited in wire and cable applications that require high temperature capability and impact resistance, such as wiring under the hood of automobiles, certain home appliances and related high temperature applications.

It is known to improve the impact strength of polyarylene sulfide by the addition of elastomeric materials thereto. Those compositions are disclosed, for example, in U.S. Patent Nos. 5,300,362; 6,805,956; 6,645,623; 6,608,136; 5,654,358; and 5,625,002. Although the additional of elastomeric materials improves flexibility, the toughness of the overall material is reduced.

Therefore, there remains a need to for a material containing PPS that is heat, chemical, and abrasion resistant, and has high impact strength for cable coverings, such as jackets and insulation.

### SUMMARY OF THE INVENTION

An object of the present invention is to provide a composition for a cable covering, such as an insulation or a jacket. The compostion contains a crosslinked polymer containing polyphenylene sulfide (PPS) and an impact modifier. Preferably, the impact modifier is present at about 20-50 percent (by weight of the total composition), preferably about 20-30 percent; and PPS is present at about 50-80 percent (by weight of the total composition), preferably about 70-80 percent. It is preferred that the polymer is crosslinked using irradiation. The invention provides a cable covering material that is heat, chemical, and abrasion resistant, and has high impact strength.

Another object of the present invention is to provide a cable containing a conductor and cover surrounding the conductor. The cover is made of a crosslinked polymer containing PPS and an impact modifier.

Methods for making the material and the cable are also provided.

### DETAILED DESCRIPTION OF THE PREFERRED EMBODIMENTS

The present invention relates to a cable covering composition made from a crosslinked polymer containing polyphenylene sulfide (PPS) and an impact modifier. The crosslinking can be between the impact modifier, the impact modifier with the PPS, and/or the PPS; preferably the crosslinking between the impact modifier. Crosslinking can be accomplished using methods known in the art, including, but not limited to, irradiation, chemical or steam curing, and saline curing. The crosslinking can be accomplished by direct carbon-carbon bond between adjacent polymers or by a linking group. Preferably, the composition contains about 20-50 percent (by weight of the total composition), more preferably about 20-30 percent, impact modifier, and about 50-80 percent (by weight of the total composition), more preferably about 70-80 percent, PPS. In a preferred embodiment, the polymer is formed such that the PPS forms a continuous phase while the polyelefin forms a dispersed phase.

The polyphenylene sulfide (PPS) used in the present invention is a polymer containing recurring units represented by the structural formula 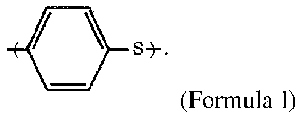 Preferably, the polymer contains at least 70 mole percent to at least 90 mole percent of the monomer of formula 1.

The PPS generally includes a polymer having a relatively low molecular weight, which is typically prepared by the process disclosed in U.S. Pat. No. 3,354,129, and a polymer having a relatively high molecular weight, which is typically prepared by the process disclosed in U.S. Pat. No. 3,919,177. The polymerization degree of the polymer obtained by the process disclosed in U.S. Pat. No. 3,354,129 can be increased by heating the polymer in an oxygen atmosphere after the polymerization or heating the polymer in the presence of a crosslinking agent such as a peroxide. Any PPS prepared according to the known processes can be used in the present invention, but a substantially linear polymer having a relatively high molecular weight, which is typically prepared according to the process disclosed in U.S. Pat. No. 3,919,177, is preferable.

The kind of PPS used in the present invention is not particularly critical, but preferably PPS, which has been subjected to a deionizing purification treatment to remove ionic species, is used. Preferably, the ion content of PPS expressed as the sodium content is not larger than 900 ppm, preferably not larger than 500 ppm. Effective means for reducing the sodium content can be, but are not limited to, (a) an acid treatment, (b) a hot water treatment, and (c) an organic solvent washing treatment. Those methods are known in the art and are disclosed, e.g., in U.S. Patent No. 5,625,002, which is incorporated herein by reference.

An impact modifier, as used herein, refers to a polymer, usually an elastomer or plastic, that is added to the PPS to improve the impact resistance of the PPS. Preferably, the impact modifier is a polyolefin-based polymer. Polyolefins, as used herein, are polymers produced from alkenes having the general formula CₙH₂ₙ. In embodiments of the invention, the polyolefin is prepared using a conventional Ziegler-Natta catalyst. In preferred embodiments, of the invention the polyolefin is selected from the group consisting of a Ziegler-Natta polyethylene, a Ziegler-Natta polypropylene, a copolymer of Ziegler-Natta polyethylene and Ziegler-Natta polypropylene, and a mixture of Ziegler-Natta polyethylene and Ziegler-Natta polypropylene. In more preferred embodiments, of the invention the polyolefin is a Ziegler-Natta low density polyethylene (LDPE) or a Ziegler-Natta linear low density polyethylene (LLDPE) or a combination of a Ziegler-Natta LDPE and a Ziegler-Natta LLDPE.

In other embodiments of the invention, the polyolefin is prepared using a metallocene catalyst. Alternatively, the polyolefin is a mixture or blend of Ziegler-Natta and metallocene polymers.

The impact modifers utilized in the insulation composition for electric cable in accordance with the invention may also be selected from the group of polymers consisting of ethylene polymerized with at least one co-monomer selected from the group consisting of C₃ to C₂₀ alpha-olefins and C₃ to C₂₀ polyenes. Generally, the alpha-olefins suitable for use in the invention contain in the range of about 3 to about 20 carbon atoms. Preferably, the alpha-olefins contain in the range of about 3 to about 16 carbon atoms, most preferably in the range of about 3 to about 8 carbon atoms. Illustrative non-limiting examples of such alpha-olefins are propylene, 1-butene, 1-pentene, 1-hexene, 1-octene and 1-dodecene.

The impact modifiers utilized in the insulation composition for cables in accordance with the invention may also be selected from the group of polymers consisting of either ethylene/alpha-olefin copolymers or ethylene/alpha-olefin/diene terpolymers. The polyene utilized in the invention generally has about 3 to about 20 carbon atoms. Preferably, the polyene has in the range of about 4 to about 20 carbon atoms, most preferably in the range of about 4 to about 15 carbon atoms. Preferably, the polyene is a diene, which can be a straight chain, branched chain, or cyclic hydrocarbon diene. Most preferably, the diene is a non conjugated diene. Examples of suitable dienes are straight chain acyclic dienes such as: 1,3-butadiene, 1,4-hexadiene and 1,6-octadiene; branched chain acyclic dienes such as: 5-methyl-1,4-hexadiene, 3,7-dimethyl-1,6-octadiene, 3,7 -dimethyl-1,7-octadiene and mixed isomers of dihydro myricene and dihydroocinene; single ring alicyclic dienes such as: 1,3-cyclopentadiene, 1,4-cylcohexadiene, 1,5-cyclooctadiene and 1,5-cyclododecadiene; and multi-ring alicyclic fused and bridged ring dienes such as: tetrahydroindene, methyl tetrahydroindene, dicylcopentadiene, bicyclo-(2,2,1)-hepta-2-5-diene; alkenyl, alkylidene, cycloalkenyl and cycloalkylidene norbornenes such as 5-methylene-2morbomene (MNB), 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornene. Of the dienes typically used to prepare EPR's, the particularly preferred dienes are 1,4-hexadiene, 5-ethylidene-2-norbornene, 5-vinyllidene-2-norbornene, 5-methylene-2-norbornene and dicyclopentadiene. The especially preferred dienes are 5-ethylidene-2-norbornene and 1,4-hexadiene.

As an additional polymer in the polyolefin composition, a non-metallocene polyolefin may be used having the structural formula of any of the polyolefins or polyolefin copolymers described above. Ethylene-propylene rubber (EPR), polyethylene, polypropylene may all be used in combination with the Zeigler Natta and/or metallocene polymers.

In embodiments of the invention, the polyolefin contains 30% to 50% by weight Zeigler Natta polymer or polymers and 50% to 70% by weight metallocene polymer or polymers.

A number of catalysts have been found for the polymerization of olefins. Some of the earliest catalysts of this type resulted from the combination of certain transition metal compounds with organometallic compounds of Groups I, II, and III of the Periodic Table. Due to the extensive amounts of early work done by certain research groups, many of the catalysts of that type came to be referred to by those skilled in the area as Ziegler-Natta type catalysts. The most commercially successful of the so-called Ziegler-Natta catalysts have heretofore generally been those employing a combination of a transition metal compound and an organoaluminum compound.

Metallocene polymers are produced using a class of highly active olefin catalysts known as metallocenes, which for the purposes of this application are generally defined to contain one or more cyclopentadienyl moiety. The manufacture of metallocene polymers is described in U.S. Patent No. 6,270,856 to Hendewerk, et al, the disclosure of which is incorporated by reference in its entirety.

Metallocenes are well known, especially in the preparation of polyethylene and copolyethylene-alpha-olefins. These catalysts, particularly those based on group IV transition metals, zirconium, titanium and hafnium, show extremely high activity in ethylene polymerization. Various forms of the catalyst system of the metallocene type may be used for polymerization to prepare the polymers used in this invention, including but not limited to those of the homogeneous, supported catalyst type, wherein the catalyst and cocatalyst are together supported or reacted together onto an inert support for polymerization by a gas phase process, high pressure process, or a slurry, solution polymerization process. The metallocene catalysts are also highly flexible in that, by manipulation of the catalyst composition and reaction conditions, they can be made to provide polyolefins with controllable molecular weights from as low as about 200 (useful in applications such as lube-oil additives) to about 1 million or higher, as for example in ultra-high molecular weight linear polyethylene. At the same time, the MWD of the polymers can be controlled from extremely narrow (as in a polydispersity of about 2), to broad (as in a polydispersity of about 8).

Exemplary of the development of these metallocene catalysts for the polymerization of ethylene are U.S. Pat. No. 4,937,299 and EP-A-0 129 368 to Ewen, et al., U.S. Pat. No. 4,808,561 to Welborn, Jr., and U.S. Pat. No. 4,814,310 to Chang, which are all hereby fully incorporated by reference. Among other things, Ewen, et al. teaches that the structure of the metallocene catalyst includes an alumoxane, formed when water reacts with trialkyl aluminum. The alumoxane complexes with the metallocene compound to form the catalyst. Welborn, Jr. teaches a method of polymerization of ethylene with alpha-olefins and/or diolefins. Chang teaches a method of making a metallocene alumoxane catalyst system utilizing the absorbed water in a silica gel catalyst support. Specific methods for making ethylene/alpha-olefin copolymers, and ethylene/alpha-olefin/diene terpolymers are taught in U.S. Pat. Nos. 4,871,705 (issued Oct. 3, 1989) and 5,001,205 (issued Mar. 19, 1991) to Hoel, et al., and in EP-A-0 347 129 published Apr. 8, 1992, respectively, all of which are hereby fully incorporated by reference.

The preferred polyolefins are polyethylene, polybutylene, ethylene-vinyl-acetate, ethylene-propylene copolymer, or other ethylene -α olefin copolymers. Other preferred polyolefin-based polymers include epoxy functionalized polyolefins, which are commercially available as Lotader® from Arkema; maleic anhydride functional polyolefins, which are commercially available as Fusabond® grades from DuPont; ionomer resins, which are commercially available as Surlyn® from DuPont; and silane grafted polyolefins, which are commercially available from Borealis and Equistar.

Other polymeric components can also be added to the present composition. For example, epoxy containing polymers, such as those disclosed in U.S. Patent No. 5,625,002, which is incorporated herein by reference, or polymeric grafting agents, such as those disclosed in U.S. Patent No. 6,608,136, which is also incorporated herein by reference, can be used with the present composition. Overall, the polymers of U.S. Patent Nos. 5,625,002; 6,608,136; and 4,889,893, which are incorporated herein by reference, are also useful for the present invention.

The insulation compositions may optionally be blended with various additives that are generally used in insulted wires or cables, such as an antioxidant, a metal deactivator, a flame retarder, a dispersant, a colorant, a filler, a stabilizer, a peroxide, and/or a lubricant, in the ranges where the object of the present invention is not impaired. The additives are present at about 0.2-2.0%.

The antioxidant can include, for example, amine-antioxidants, such as 4,4'-dioctyl diphenylamine, N,N'-diphenyl-p-phenylenediamine, and polymers of 2,2,4-trimethyl-1,2-dihydroquinoline; phenolic antioxidants, such as thiodiethylene bis[3-(3,5-di-tert-butyl-4-hydroxyphenyl)propionate], 4,4'-thiobis(2-tert-butyl-5-methylphenol), 2,2'-thiobis(4-methyl-6-tert-butyl-phenol), benzenepropanoic acid, 3,5 bis(1,1 dimethylethyl)4-hydroxy benzenepropanoic acid, 3,5-bis(1,1-dimethylethyl)-4-hydroxy-C13-15 branched and linear alkyl esters, 3,5-di-tert-butyl-4hydroxyhydrocinnamic acid C7-9-Branched alkyl ester, 2,4-dimethyl-6-t-butylphenol Tetrakis{methylene3-(3',5'-ditert-butyl-4'-hydroxyphenol)propionate}metha- ne or Tetrakis methylene3-(3',5'-ditert-butyl-4'-hydrocinnamate}methane, 1,1,3tris(2-methyl-4hydroxyl5butylphenyl)butane, 2,5,di t-amyl hydroqunone, 1,3,5-tri methyl2,4,6tris(3,5di tert butyl4hydroxybenzyl)benzene, 1,3,Stris(3,Sdi tert butyl4hydroxybenzyl)isocyanurate, 2,2Methylene-bis-(4-methyl-6-tert butyl-phenol), 6,6'-di-tert-butyl-2,2'-thiodi-p-cresol or 2,2'-thiobis(4-methyl-6-tert-butylphenol), 2,2ethylenebis(4,6-di-t-butylphenol), triethyleneglycol bis{3-(3-t-butyl-4-hydroxy-5methylphenyl)propionate}, 1,3,5tris(4tert butyl3hydroxy-2,6-dimethylbenzyl)-1,3,5-triazine-2,4,6-(1H,3H,5H)trione, 2,2methylenebis{6-(1-methylcyclohexyl)-p-cresol}; and/or sulfur antioxidants, such as bis(2-methyl-4-(3-n-alkylthiopropionyloxy)-5-t-butylphenyl)sulfide, 2-mercaptobenzimidazole and its zinc salts, and pentaerythritol-tetrakis(3-lauryl-thiopropionate). The preferred antioxidant is thiodiethylene bis[3-[3,5-di-tert-butyl-4-hydroxyphenyl]propionate which is available commercially as Irganox^{®} 1035.

The metal deactivator can include, for example, N,N'-bis(3-(3,5-di-t-butyl-4-hydroxyphenyl)propionyl)hydrazine, 3-(N-salicyloyl)amino-1,2,4-triazole, and/or 2,2'-oxamidobis-(ethyl 3-(3,5-di-t-butyl-4-hydroxyphenyl)propionate).

The flame retarder can include, for example, halogen flame retarders, such as tetrabromobisphenol A (TBA), decabromodiphenyl oxide (DBDPO), octabromodiphenyl ether (OBDPE), hexabromocyclododecane (HBCD), bistribromophenoxyethane (BTBPE), tribromophenol (TBP), ethylenebistetrabromophthalimide, TBA/polycarbonate oligomers, brominated polystyrenes, brominated epoxys, ethylenebispentabromodiphenyl, chlorinated paraffins, and dodecachlorocyclooctane; inorganic flame retarders, such as aluminum hydroxide and magnesium hydroxide; and/or phosphorus flame retarders, such as phosphoric acid compounds, polyphosphoric acid compounds, and red phosphorus compounds.

The filler can be, for example, carbons, clays, zinc oxide, tin oxides, magnesium oxide, molybdenum oxides, antimony trioxide, silica, talc, potassium carbonate, magnesium carbonate, and/or zinc borate.

The stabilizer can be, but is not limited to, hindered amine light stabilizers (HALS) and/or heat stabilizers. The HALS can include, for example, bis(2,2,6,6-tetramethyl-4-piperidyl)sebaceate (Tinuvin^{®} 770); bis(1,2,2,6,6-tetramethyl-4-piperidyl)sebaceate+methyl1,2,2,6,6-tetrameth-yl-4-piperidyl sebaceate (Tinuvin^{®} 765); 1,6-Hexanediamine, N,N'-Bis(2,2,6,6-tetramethyl-4-piperidyl)polymer with 2,4,6 trichloro-1,3,5-triazine, reaction products with N-butyl2,2,6,6-tetramethyl-4-piperidinamine (Chimassorb^{®} 2020); decanedioic acid, Bis(2,2,6,6-tetramethyl-1-(octyloxy)-4-piperidyl)ester, reaction products with 1,1-dimethylethylhydroperoxide and octane (Tinuvin^{®} 123); triazine derivatives (tinuvin^{®} NOR 371); butanedioc acid, dimethylester, polymer with 4-hydroxy-2,2,6,6-tetramethyl-1-piperidine ethanol (Tinuvin^{®} 622); 1,3,5-triazine-2,4,6-triamine,N,N"'-[1,2-ethanediyl-bis[[[4,6-bis-[butyl(1,2,2,6,6pentamethyl-4-piperdinyl)amino]-1,3,5-triazine-2-yl]imino-]-3,1-propanediyl]]bis[N',N"-dibutyl-N',N"bis(2,2,6,6-tetramethyl-4-pipe- ridyl) (Chimassorb^{®} 119); and/or bis (1,2,2,6,6-pentamethyl-4-piperidinyl) sebacate (Songlight^{®} 2920); poly[[6-[(1,1,3,3-terramethylbutyl)amino]-1,3,5-triazine-2,4-diyl][2,2,6,6-tetramethyl-4-piperidinyl)imino]-1,6-hexanediyl[(2,2,6,6-tetramethyl-4-piperidinyl)imino]] (Chimassorb^{®}944); Benzenepropanoic acid, 3,5-bis(1,1-dimethyl-ethyl)-4-hydroxy-.C7-C9 branched alkyl esters (Irganox^{®} 1135); and/or Isotridecyl-3-(3,5-di-tert-butyl-4-hydroxyphenyl) propionate (Songnox^{®} 1077 LQ). The preferred HALS is bis(1,2,2,6,6-pentamethyl-4-piperidinyl) sebacate commercially available as Songlight 2920.

The heat stabilizer can be, but is not limited to, 4,6-bis (octylthiomethyl)-o-cresol (Irgastab KV-10); dioctadecyl 3,3'-thiodipropionate (Irganox PS802); poly[[6-[(1,1,3,3-terramethylbutyl)amino]-1,3,5-triazine-2,4-diyl][2,2,6,6-tetramethyl-4-piperidinyl)imino]-1,6-hexanediyl[(2,2,6,6-tetramethyl-4-piperidinyl)imino]] (Chimassorb^{®}944); Benzenepropanoic acid, 3,5-bis(1,1-dimethyl-ethyl)-4-hydroxy-.C7-C9 branched alkyl esters (Irganox^{®} 1135); Isotridecyl-3-(3,5-di-tert-butyl-4-hydroxyphenyl) propionate (Songnox^{®} 1077 LQ). If used, the preferred heat stabilizer is 4,6-bis (octylthiomethyl)-o-cresol (Irgastab KV-10); dioctadecyl 3,3'-thiodipropionate (Irganox PS802) and/or poly[[6-[(1,1,3,3-terramethylbutyl)amino]-1,3,5-triazine-2,4-diyl] [2,2,6,6-tetramethyl-4-piperidinyl)imino]-1,6-hexanediyl[(2,2,6,6-tetramethyl-4-piperidinyl)imino]] (Chimassorb^{®}944).

The components of the compositions described herein are melt blended with each other under high shear. The components may first be combined with one another in a "salt and pepper" blend , i.e. a pellet blend of each of the ingredients, or they may be combined with one another via simultaneous or separate metering of the various components, or they may be divided and blended in one or more passes into one or more sections of mixing equipment such as an extruder, Banbury, Buss Kneader, Farrell continuous mixer, or other mixing equipment. For example, an extruder with two or more feed zones into which one or more of the ingredients may be added sequentially, can be used.

The order of addition does not have any effect on the high temperature properties described by this invention. High shear insures proper dispersion of all the components such as would be necessary to carry out the grafting reaction. In addition, sufficient mixing is essential to achieve the morphology which is necessary in the compositions of the present invention.

The composition of the present invention is crosslinked. In an embodiment, the polymer is crosslinked by irradiation. In this embodiment, the polymer is preferably irradiated in an irradiation chamber at a dose of about 5 to about 20 megaRad (MR), while the polymer is pull through the chamber at about 50 ft/min. Although, irradiation is disclosed herein, other methods for crosslinking of the polymer known in the art can be used. For example, if silane grafted copolymer is used as the impact modifer, it can be crosslinked via moisture curing. In a preferred embodiment, the polymer is crosslinked after being formed as a cover on a cable. The cover can be formed, e.g. by extrusion as discussed below.

After the various components of the composition are uniformly admixed and blended together, they are further processed to fabricate the cables of the invention. Prior art methods for fabricating polymer cable insulation or cable jacket are well known, and fabrication of the cable of the invention may generally be accomplished by any of the various extrusion methods.

In a typical extrusion method, an optionally heated conducting core to be coated is pulled through a heated extrusion die, generally a cross-head die, in which a layer of melted polymer is applied to the conducting core. Upon exiting the die, if the polymer is adapted as a thermoset composition, the conducting core with the applied polymer layer may be passed through a heated vulcanizing section, or continuous vulcanizing section and then a cooling section, generally an elongated cooling bath, to cool. Multiple polymer layers may be applied by consecutive extrusion steps in which an additional layer is added in each step, or with the proper type of die, multiple polymer layers may be applied simultaneously.

The conductor of the invention may generally comprise any suitable electrically conducting material, although generally electrically conducting metals are utilized. Preferably, the metals utilized are copper or aluminum.

### Example 1

Two engineered compositions from Chevron Philips, Xtel XE4300NA and XE3202NA were evaluated for EM60 electrical properties, physical properties, and VW1 flame testing before and after irradiation. Both Xtel XE4300NA and XE3202NA grades contain PPS and an elastomer with XE3202NA containing more elastomer than XE4300NA as evidenced by higher initial tensile elongation value. VW-1, FT-1 and FT-2 flame tests were performed in accordance to UL2556 (2007), which is incorporated herein by reference. Tensile strength and elongation were measured in accordance to ASTM D412 (2008), which is incorporated herein by reference. Table 1 shows the summary of results for both compositions before and after irradiation.

| Table 1. | | | | |
|---|---|---|---|---|
| Test | Before Irritiadion | After Irritiadion | Before Irritiadion | After Irritiadion |
| | Xtel 3202NA | Xtel 3202NA | Xtel 4300NA | Xtel 4300NA |
| | | | | |
| Tensile Strength (psi) | 5447.83 | 6056.53 | 6393.85 | 6681.48 |
| Elongation (%) | 142.67 | 151.18 | 68.1 | 57.12 |
| 100% Modulus (psi) | 5102.1 | 5560.28 | NA | NA |
| VW1 Flame Test | Failed (Cotton Burn) | Failed (Longer than 60 sec Burn) | Failed (Cotton Burn, Flame exceeded 60 sec | Passed |
| FT-2 Flame Test | Not Tested | Passed | Not Tested | Passed |

Tables 2 and 3 show the vertical flame test (VW1)results for XE3202NA before and after irradiation, respectively:

**Table 2. Vertical Flame Test Before irradiation of Xtel XE3202NA**

| | Sample 1 | Sample 2 | Sample 3 | Mean |
|---|---|---|---|---|
| | Seconds | Seconds | Seconds | Seconds |
| Application 1 | 25 (Cotton Fire) | 13 (Cotton Fire) | 30 (Cotton Fire) | 22.6 |
| Application 2 | | | | |
| Flag Burn Y/N | No | No | No | |
| Cotton Burn Y/N | Yes | Yes | Yes | |
| Pass / Fail | Fail | Fail | Fail | Cotton Burn |
| Comments: | Strong flame | Material melts | Material drips | |
| | | | | |

**Table 3. Vertical Flame Test After Irradiation (20 MR) of Xtel XE3202NA**

| Burn | Sample 1 | Sample 2 | Mean |
|---|---|---|---|
| Unit | Seconds | Seconds | Seconds |
| Application 1 | 15 | 15 | 15 |
| Application 2 | 15 (Flag Fire) | 8 (Flag Fire) | 11.5 |
| Flag Burn Y/N | Yes | Yes | |
| Cotton Burn Y/N | No | No | |
| Pass / Fail | Fail | Fail | Flag Burn |
| Comments: | Jacket Dripped | Long Burns | |

Tables 4 and 5 show the vertical flame test (VW1) results for XE4300NA before and after irradiation, respectively:

**Table 4. Vertical Flame Test Before Irradiation of XE4300NA**

| | Sample 1 | Sample 2 | Sample 3 | Mean |
|---|---|---|---|---|
| | Seconds | Seconds | Seconds | Seconds |
| Application 1 | 60 (Over 60 sec) | 11 | 60 (Over 60 Sec) | 41.5 |
| Application 2 | | 41 (Flag Burn) | | 25.5 |
| Application 3 | | | | 5 |
| Application 4 | | | | 5 |
| Application 5 | | | | 6 |
| Flag Burn Y/N | No | Yes | No | |
| Cotton Burn Y/N | No | No | YES | |
| Pass / Fail | Fail | Fail | Fail | |
| Comments: | Over Time Limit | Flag Burn | Cotton Burn | 3 of 3 fail |

**Table 5. Vertical Flame Test After Irradiation (20 MR) of XE4300NA**

| | Sample 1 | Sample 2 | Sample 3 | Mean |
|---|---|---|---|---|
| | Seconds | Seconds | Seconds | Seconds |
| Application 1 | 11 | 7 | 17 | 11.6 |
| Application 2 | 12 | 42 | 12 | 22 |
| Application 3 | 8 | 3 | 5 | 5.3 |
| Application 4 | 3 | 9 | 3 | 5 |
| Application 5 | 2 | 5 | 2 | 3 |
| Flag Burn Y/N | No | No | No | |
| Cotton Burn Y/N | No | No | No | |
| Pass / Fail | Pass | Pass | Pass | |
| Comments: | Low Smoke | | | 3 of 3 Passed |

### Example 2

Round 14 gauge copper conductor wires with 30 mils of insulation were extruded with a 20:1 LD Davis standard extruder. Temperature Settings on the extruder were as follows:
Feed section 1 = 550°F
Feed section 2 = 560°F
Metering section = 560°F
Compression section = 560°F
Head = 550°F
Die = 550°F
The insulation is then irradiated at a dose of 20 mega rads (MR). The wire is then subjected to electrical properties testing. Specific inductive capacitance (also called Relative Permittivity) and dissipation factor (Tan delta) were measured in accordance to UL2556 (2007), which is incorporated herein by reference. Table 6 shows electrical properties for XE3202NA after irradiation:

**Table 6.**

| Compound | XE 3202NA | | | |
|---|---|---|---|---|
| Wall Thickness | 34 mils | | | |
| | | | | |
| Days | SIC (40 VPM) | Tan Delta (40 VPM) | SIC (80 VPM) | Tan Delta (80VPM) |
| 1 | 3.75 | 11.5 | 3.76 | 12.7 |
| 7 | 3.81 | 9.35 | 3.83 | 10.8 |
| 14 | 3.89 | 9.27 | 3.9 | 10.87 |

| | | | | |
|---|---|---|---|---|
| SIC=specific inductive capacitance; VPM=volts per mil; | | | | |

Table 7 shows electrical properties for XE4300NA after irradiation:

**Table 7.**

| Compound | XE 4300NA | | | |
|---|---|---|---|---|
| Wall Thickness | 37 mils | | | |
| | | | | |
| Days | SIC (40 VPM) | TAN Delta (40 VPM) | SIC (80 VPM) | Tan Delta (80VPM) |
| 1 | 3.90 | 4.69 | 3.90 | 4.94 |
| 7 | 3.92 | 2.89 | 3.92 | 3.10 |
| 14 | 3.97 | 2.36 | 3.97 | 2.65 |

Although certain presently preferred embodiments of the invention have been specifically described herein, it will be apparent to those skilled in the art to which the invention pertains that variations and modifications of the various embodiments shown and described herein may be made without departing from the spirit and scope of the invention. Accordingly, it is intended that the invention be limited only to the extent required by the appended claims and the applicable rules of law.

## Claims

1. A composition comprising an impact modifier and polyphelene sulfide (PPS), wherein the composition is crosslinked.

2. The composition of claim 1, wherein the impact modifier content is about 20-50 percent by weight of the composition.

3. The composition of claim 1, wherein the PPS content is about 50-80 percent by weight of the composition.

4. The composition of claim 1, further comprising a grafting agent.

5. The composition of claim 1, further comprising a epoxy containing polymer.

6. The composition of claim 1, further comprising an additive.

7. The composition of claim 6, wherein the additive is present at about 0.2-2 %.

8. The composition of claim 6, wherein the additive is selected from the group consisting of an antioxidant, a metal deactivator, a flame retarder, a dispersant, a colorant, a filler, a stabilizer, a peroxide, and a lubricant.

9. The composition of claim 1, wherein the impact modifier is a polyolefin-based polymer.

10. The composition of claim 1, wherein the PPS forms a continuous phase while the impact modifier forms a dispersed phase.

11. The composition of claim 1, wherein the impact modifier is crosslinked.

12. A cable comprising a conductor and a cover made of the polymer of claim 1.

13. The cable of claim 12, wherein the cover is an insulation or a jacket.

14. A method for making a cable comprising the steps of
a. blending PPS and an impact modifier to provide a polymer composition;
b. extruding the polymer composition around a conductor; and
c. crosslinking the polymer composition.

15. The method of claim 14, wherein step c comprises exposing the polymer composition to radiation.

16. The method of claim 15, wherein the radiation is about 5-25 megaRads.

17. The method of claim 15, wherein the impact modifier content is about 20-50 percent by weight of the composition.

18. The method of claim 15, wherein the PPS content is about 50-80 percent by weight of the composition.

19. The method of claim 15, wherein the impact modifier is a polyolefin-based polymer.

20. The method of claim 15, wherein wherein the PPS forms a continuous phase while the impact modifier forms a dispersed phase.
